# EUROPEAN PATENT APPLICATION

(11) **EP 4 729 984 A2**
(43) Date of publication of application: **22.04.2026**
(21) Application number: 25203991.2
(22) Date of filing: 23.09.2025
(51) Int. Cl.: G01S 13/34, G01S 13/82, G01S 13/88, G01S 13/935

(54) **DATA COMMUNICATION CHANNEL USING RADAR UNIT AND ACTIVE RADAR BEACON**

(30) Priority: 16.10.2024 US 202418917102
(71) Applicant: Honeywell International Inc., Charlotte, NC 28202 (US)
(72) Inventor: KEJIK, Petr, Charlotte, 28202 (US); BEDA, Tomas, Charlotte, 28202 (US); STENCEL, Vit, Charlotte, 28202 (US)
(74) Representative: Haseltine Lake Kempner LLP

(57) **Abstract**

A system, comprises: active radar beacon(s) positioned within geographic area and comprising: first antenna(s) and first circuitry configured to encode data into artificial echo(s) by adding adjusted delay into the artificial echo(s), wherein the artificial echo(s) with adjusted delay is transmitted via first antenna(s), wherein artificial echo(s) with adjusted delay emulates return signal; and radar unit onboard vehicle and comprising: second antenna(s); transmitter communicatively coupled to second antenna(s), transmitter configured to transmit radar signals through second antenna(s) to geographic area including active radar beacon(s); receiver communicatively coupled to second antenna(s) and configured to receive return signals from geographic area, return signals including reflected signals reflected from surfaces and artificial echo(s) transmitted from active radar beacon(s); and second circuitry configured to receive and decode data encoded into artificial echo(s) to generate decoded data by detecting changes in a delay in artificial echo(s) received by receiver.

## Description

### CROSS-REFERENCE TO RELATED APPLICATIONS

This application is related to United States Provisional Patent Application No. 63/510,973 filed on June 29, 2023 and entitled "LANDING NAVIGATION BASED ON RADAR ALTIMETER AND MULTI-ECHOES RF BEACONS"; and United States Patent Application No. 18/493,486 filed on October 24, 2023 and entitled "LANDING NAVIGATION BASED ON RADAR ALTIMETER AND MULTI-ECHOES RF BEACONS"; all of which are hereby incorporated herein by reference in their entirety.

### BACKGROUND

Radar can be used to determine distances to objects and/or altitudes of aircraft.

### SUMMARY

A system comprises: at least one active radar beacon positioned within a geographic area, the at least one active radar beacon comprising: at least a first antenna; and first circuitry configured to encode data into at least one artificial echo by adding an adjusted delay into the at least one artificial echo, wherein the at least one artificial echo with the adjusted delay is transmitted via the at least the first antenna, wherein the at least one artificial echo emulates a return signal; and a radar unit onboard a vehicle, the radar unit comprising: at least a second antenna; a transmitter communicatively coupled to the at least the second antenna, the transmitter configured to transmit radar signals through the at least the second antenna to the geographic area including the at least one active radar beacon; a receiver communicatively coupled to the at least the second antenna, the receiver configured to receive return signals from the geographic area, the return signals including reflected signals reflected from surfaces and the at least one artificial echo transmitted from the at least one active radar beacon; and second circuitry configured to receive and decode the data encoded into the at least one artificial echo to generate decoded data by detecting changes in a delay in the at least one artificial echo received by the receiver.

A method comprises: transmitting, by a transmitter of a radar unit onboard a vehicle and via at least a first antenna, radar signals to a geographic area including at least one active radar beacon; encoding, by the at least one active radar beacon, encoded data into at least one artificial echo by adding an adjusted delay into the at least one artificial echo, wherein the at least one artificial echo emulates a return signal; transmitting, by the at least one active radar beacon and via at least a second antenna, the at least one artificial echo with the adjusted delay; receiving, by a receiver of the radar unit onboard the vehicle and via the at least the first antenna, return signals from the geographic area, the return signals including reflected signals reflected from surfaces and the at least one artificial echo transmitted from the at least one active radar beacon; and decoding, by circuitry onboard the vehicle, the encoded data from the at least one artificial echo to generate decoded data by detecting changes in a delay in the at least one artificial echo received by the receiver of the radar unit onboard the vehicle.

A system comprises: at least one active radar beacon positioned within a geographic area, the at least one active radar beacon comprising: at least a first antenna; and circuitry configured to transmit at least one artificial echo via the at least the first antenna, wherein the at least one artificial echo emulates a return signal; a radar unit onboard a vehicle, the radar unit comprising: at least a second antenna; a transmitter communicatively coupled to the at least the second antenna, the transmitter configured to transmit radar signals through the at least the second antenna to the geographic area including the at least one active radar beacon, wherein the radar signals include encoded data, wherein the encoded data is encoded into the radar signals by adjusting at least one parameter of a radar waveform of the radar signals transmitted by the transmitter; and a receiver communicatively coupled to the at least the second antenna, the receiver configured to receive return signals from the geographic area, the return signals including reflected signals reflected from surfaces and the at least one artificial echo transmitted from the at least one active radar beacon; and wherein the circuitry of the at least one active radar beacon is further configured to: receive the radar signals having the radar waveform; and decode the encoded data in the radar signals into decoded data by detecting changes in the at least one parameter of the radar waveform of the radar signals received by the receiver.

A method comprises: encoding, by circuitry onboard a vehicle, encoded data into radar signals by adjusting at least one parameter of a radar waveform of the radar signals; transmitting, by a transmitter of a radar unit onboard the vehicle and via at least a first antenna, the radar signals to a geographic area including at least one active radar beacon, wherein the radar signals include the encoded data encoded into the radar signals; transmitting, by the at least one active radar beacon positioned within the geographic area and via at least a second antenna, at least one artificial echo emulating a return signal; receiving, by a receiver of the radar unit onboard the vehicle and via the at least the first antenna, return signals from the geographic area, the return signals including reflected signals from surfaces and the at least one artificial echo transmitted from the at least one active radar beacon; receiving, by the at least one active radar beacon, the radar signals having the radar waveform; and decoding, by the at least one active radar beacon, the encoded data in the radar signals into decoded data by detecting changes in the at least one parameter of the radar waveform of the radar signals received by the at least one active radar beacon.

### BRIEF DESCRIPTION OF DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a block diagram illustrating example systems having radar units and active radar beacons.
Figure 2 is a block diagram illustrating a radar unit.
Figure 3 is a block diagram illustrating an active radar beacon.
Figure 4A is a block diagram illustrating an example system having a vehicle mounted radar unit and active radar beacons.
Figure 4B is a block diagram showing beacon echoes implementing uplink communication.
Figure 5 is a diagram illustrating a radar waveform.
Figure 6 is an example method for transmitting signals from an active radar beacon to a radar unit onboard a vehicle.
Figure 7 is an example method for transmitting signals from a radar unit onboard a vehicle to an active radar beacon.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

In examples, three-dimensional (3D) navigation of aircraft and other vehicles can occur using radar altimeters. In examples, at least one active radar beacon is positioned within a geographic area to aid in 3D navigation using radar altimeters. In examples, the at least one active radar beacon is configured to repeat radar signals as artificial echoes to emulate returns signals. In examples, data communication from at least one radar unit to the at least one active radar beacon is encoded into the radar signals. In examples, data communication from the at least one active radar beacon to the at least one radar unit is encoded into the at least one artificial echo. In examples, the data communication from the at least one radar unit to the at least one active radar beacon and/or the data communication from the at least one active radar beacon to the at least one radar unit enables a data communication channel (such as a safety data communication channel) between the at least one radar unit and the at least one active radar beacon. In examples, the data communication channel has a relatively low data rate and can be enabled using current radar units (such as radar altimeters or multipurpose radars) with software updates to the at least one radar unit and the at least one active radar beacon. In examples, the at least one artificial echo and/or the data communication channel can help with radar navigation, including navigation during approach and landing (such as radar altimeter navigation).

In examples, artificial echoes from radar beacons enable navigation systems to determine both vertical and horizontal position and support integrity using conventional radar altimeter hardware with improved software functionality. In examples, the at least one artificial echo provides additional alternative sources of horizontal and vertical positions, which can improve the performance of current navigation solutions or can be used in place of navigation information, such as Global Navigation Satellite System (GNSS) sources of information in the navigation system. In examples, the at least one artificial echo is produced by at least one active radar beacon to support beacon identification. In examples, a range to the at least one artificial echo includes a range to the active radar beacon (which changes) and an artificially created range shift (which is constant). In examples, the artificial range shifts (unlike true ranges) remain constant during vehicle descent, thus making an active radar beacon easier to identify. In examples, the present approach allows for the creation of unique patterns of beacons (e.g., the patterns can be unique for neighboring vertiports). In examples, the at least one active radar beacon is implemented as signal repeaters around a landing site.

In examples, the at least one radar unit can use a radar altimeter (e.g., a single antenna radar altimeter (SARA)) with extended embedded software capable of detecting extra echoes at further ranges from the at least one active radar beacon. In examples, circuitry can be used to identify patterns in detected echoes, estimate slant ranges to the at least one active radar beacon through the identified patterns in the detected echoes. In examples, circuitry can be used to estimate three-dimensional (3D) position by multilateration of the estimate slant ranges to the at least one active radar beacon and the known positions of the at least one active radar beacon and by using other sensor measurements. In examples, navigation integrity is improved using a higher number of active radar beacons. In examples, the at least one radar unit can be a continuous-wave (CW) or pulse radar. In examples, the at least one active radar beacon is configured to re-broadcast a received signal without additional adjustment except amplification and the additional of delay.

In examples, simple data (such as aircraft identification, aircraft position, emergency flag, etc.) can be transmitted from the onboard radar unit (such as a radar altimeter) to ground infrastructure (such as vertiport or airport) using the at least one active radar beacon. In examples, the simple data is used on the ground to confirm the vehicle position from other sources to prioritize vehicles for landing and/or improve performance of collision avoidance systems, such as Airbourne Collission Avoidance System (ACAS) and more specifically ACAS X. In examples, simple/low speed data may be transmitted by software modification of a radar unit onboard a vehicle and/or at least one active radar beacon. In examples, both hardware modification and software modification is required for higher data speed transfers. In examples, data is further processed and used in a Ground Control Station (GCS). In examples, the data is secured by cybersecurity mechanisms (such as encryption method, authentication methods, etc.).

In examples, simple data (such as landing clearance, guidance for approach, etc.) can be transmitted from the ground to the onboard radar unit (such as a radar altimeter) using active ground infrastructure from the at least one active radar beacon. In examples, the data might be used to indicate the status of the vertiport or airport (such as whether the vertiport, heliport, or airport is open or closed, such as due to strong wind, emergency event, etc.). In examples, the simple data can be used for autonomous vehicles to substitute the pilot's visual control of whether the vertiport, heliport, or airport is in operation. In examples, simple/low speed data is transmitted by the at least one active radar beacon by simple software or software and hardware modification. In examples, complex ground active radar beacon design is required for higher data speed transfers. In examples, information is generated by Ground Control Station (GCS) for cooperative air vehicles. In examples, information should be secured by cybersecurity mechanisms (such as encryption methods and/or authentication methods). In examples, data transmitted from ground to the onboard radar unit might be transmitted by one active radar beacon. In examples, data transmitted from ground to the onboard radar unit might be transmitted by two or more active radar beacons, wherein all active radar beacons might transmit the same data (e.g. ,to increase data transmission robustness and to cover wider reception area(s)), or the data content might be distributed/spread out among individual active radar beacons (e.g., to increase data transmission security).

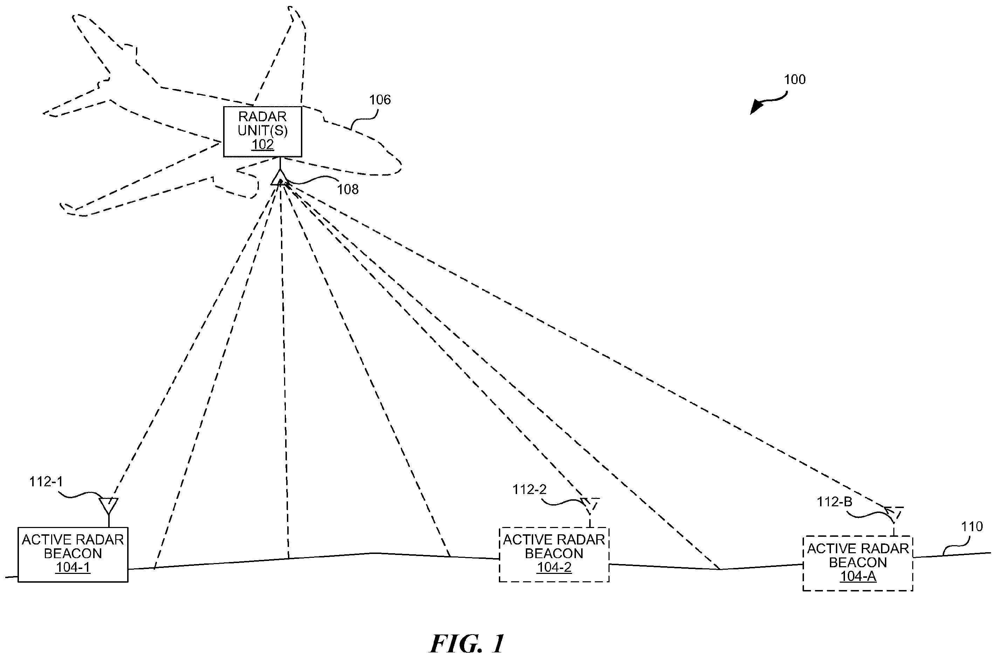

Figure 1 is a block diagram illustrating example system 100 having at least one radar unit 102 and at least one active radar beacon 104 (such as active radar beacon 104-1 and any combination of optional active radar beacons 104 through active radar beacon 104-A) positioned within a geographic area. In examples, the at least one radar unit 102 is positioned on at least one vehicle 106 (such an aircraft, spacecraft, or other vehicle). In examples, the at least one radar unit 102 is a radar altimeter.

In examples, the at least one radar unit 102 is configured (such as through a transmitter and/or other circuitry) to transmit radar signals through at least one antenna 108 toward the ground 110. In examples, the at least one radar unit 102 is configured (such as through a receiver and/or other circuitry) to receive return radar signals from the geographic area. In examples, the return radar signals include reflected signals which are reflections of the transmitted radar signals reflected from surfaces (such as the ground 110). In examples, the return radar signals include at least one artificial echo received from at least one active radar beacon 104.

In examples, the at least one active radar beacon 104 is configured to receive (such as through a receiver and/or other circuitry) radar signals transmitted from the at least one radar unit 102. In examples, the at least one active radar beacon 104 is configured to generate (such as through circuitry) the at least one artificial echo at least in part by repeating and modifying at least one radar signal of the radar signals received from the at least one radar unit 102. In examples, the at least one active radar beacon 104 is configured to transmit (such as through a transmitter and/or other circuitry) the at least one artificial echo to the at least one radar unit 102. In examples, the at least one artificial echo emulates a return signal that is reflected from surfaces (such as the ground 110).

In examples, the vehicle 106 communicates with ground operators via a data link (such as via a ground station and/or satellite link). In examples, the data link is degraded (such as due to loss of the link with the control station) and a local uplink communication (UC) might be used to transfer safety information from ground to air (such as a landing clearance, data integrity check, etc.). In examples, downlink communication (DC) from the air to the ground might be used to transfer safety information from the air to ground (such as emergency status, vehicle position, aircraft identification (ID) such as a callsign, data integrity check, etc.). In examples, the downlink communication (DC) from the air to the ground might be encoded by changing the start frequency, having a set of changes of frequency, or encoding in the phase of the radar signals. In examples, the uplink communication (UC) from the ground to the air might be encoded based on the variation and/or presence of a particular artificial echo's position (such as the n-th artificial echo's position) or by encoding in the phase of the artificial echo.

In examples, radar units (such as radar altimeters) use various modulation schemes, including Frequency-Modulated Continuous Wave (FMCW), and Pulse CW, PSK Pulsed and PSK CW technique. In examples, there are various data modulation techniques relevant for the various modulation schemes. In examples, all cybersecurity threads are addressed to provide appropriate levels of safety. In examples, standard methods for authentication, encryption, and data integrity might be applied with respect to capabilities of existing radar units (such as radar altimeters or multipurpose radars).

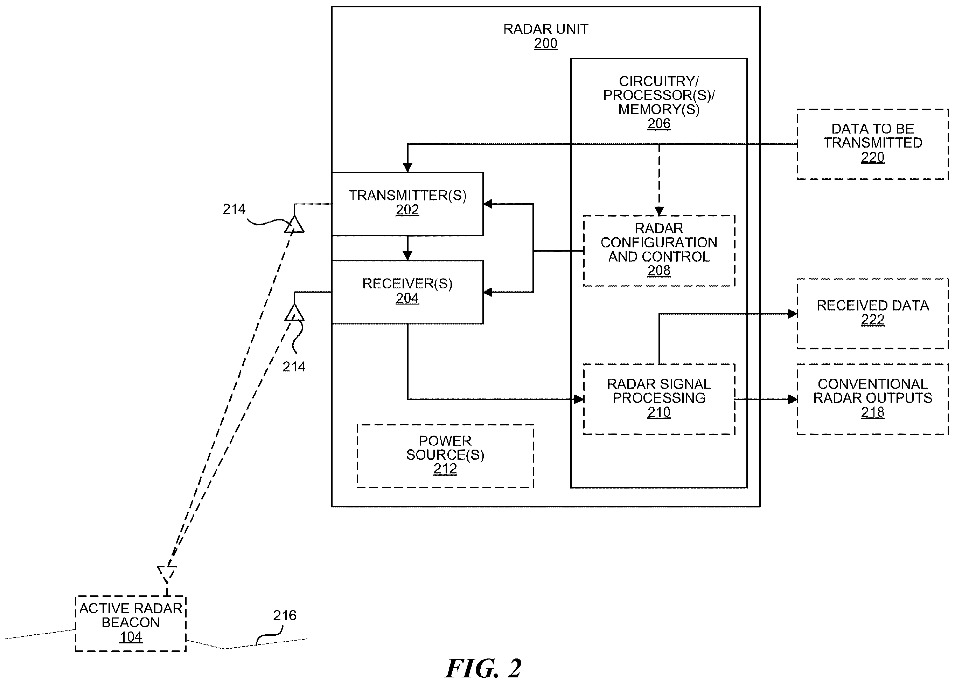

Figure 2 is a block diagram illustrating example radar unit 200. In examples, the radar unit 200 can implement any of the at least one radar unit 102. In examples, the radar unit 200 includes a radar altimeter onboard. In examples, the radar unit 200 can be implemented onboard or coupled to a vehicle, held by a person, etc. Use of the term "vehicle" is not intended to be limiting and includes all classes of vehicles falling within the ordinary meaning of the term. This would include but not limited to, aerial traversing vehicles (e.g., commercial, non-commercial, or recreational aircraft), unmanned and/or space traversing vehicles (e.g., satellites, urban air mobility vehicles), water traversing vehicles (e.g., ships, submarines), and land traversing vehicles (e.g., automobiles including cars, trucks, motorcycles). Throughout the disclosure, the vehicle may be described as an aircraft with the understanding that the principles described herein apply to other vehicles where applicable.

In examples, radar unit 200 includes at least one transmitter 202, at least one receiver 204, and at least one circuitry/processor/memory 206. In examples, the at least one circuitry/processor/memory 206 includes optional radar configuration and control 208 and/or optional radar signal processing 210. In examples, the radar unit 200 includes at least one optional power source 212 that provides power to the other elements of the radar unit 200.

In examples, the at least one transmitter 202 and the at least one receiver 204 of radar unit 200 include or are coupled to at least one antenna 214. While separate antennas 214 are shown for the at least one transmitter 202 and the at least one receiver 204 in the radar unit 200 shown in Figure 2, other embodiments include a single antenna 214 used for both the at least one transmitter 202 and the at least one receiver 204 or any number of antennas 214 used for each of the at least one transmitter 202 and the at least one receiver 204. In examples, the at least one transmitter 202 is configured to transmit radar signals through the at least one antenna 214 to the geographic area including the at least one active radar beacon 104.

In examples, the radar signals are reflected off of surface 216 (such as the ground or other objects) back to the at least one antenna 214 and received by the at least one receiver 204. In examples, the at least one active radar beacon 104 communicates at least one artificial echo toward the at least one receiver 204 and the at least one receiver 204 receives the at least one artificial echo. In examples, the at least one artificial echo emulates a return signal. In examples, the at least one receiver 204 provides return signals (including the reflected signals reflected from the surfaces 216 and the at least one artificial echo transmitted from the at least one active radar beacon 104) to the at least one circuitry/processor/memory 206. In examples, the at least one circuitry/processor/memory 206 is configured process the return signals (including the reflected signals reflected from the surfaces 216 and the at least one artificial echo transmitted from the at least one active radar beacon 104) to determine conventional radar outputs 218 regarding ranging data for the surfaces 216 and the at least one active radar beacon 104. In examples, the ranging data is based on the elapsed time between transmission of the radar signals and corresponding return signals and corresponds to the distance between the at least one antenna 214 of the radar unit 200 and the surfaces 216 and/or the at least one active radar beacon 104.

In examples, the at least one circuitry/processor/memory 206 is configured to receive data to be transmitted 220 to the at least one active radar beacon 104 (such as in air to ground communication). In examples, the at least one circuitry/processor/memory 206 is configured to encode the data to be transmitted 220 into the radar signals for transmission by the at least one transmitter 202. In examples, the at least one circuitry/processor/memory 206 is configured to encode the data to be transmitted 220 into the radar signals at least in part by adjusting at least one parameter of a radar waveform of the radar signals. In examples, adjusting the at least one parameter of the radar waveform of the radar signals includes adjusting at least one of a frequency, phase, or amplitude at which the radar signals are transmitted by the transmitter. In examples, adjusting the at least one parameter of the radar waveform of the radar signals includes changing a chirp start/stop frequency, a chirp delay, a phase modulator, etc.

In examples, the at least one circuitry/processor/memory 206 is configured to receive the radar signals having at least one artificial echo from the at least one receiver 204. In examples, the at least one circuitry/processor/memory 206 is configured to decode the encoded data from the at least one artificial echo to generate decoded data by detecting changes in a delay in the at least one artificial echo received by the receiver of the radar unit onboard the vehicle. In examples where the at least one circuitry/processor/memory 206 includes the optional radar signal processing 210, the optional radar signal processing 210 may be configured to decode the encoded data from the at least one artificial echo to generate the decoded data by detecting changes in the delay in the at least one artificial echo received by the receiver of the radar unit onboard the vehicle. In examples, the optional radar signal processing 210 is configured to decode the encoded data from the at least one artificial echo by detecting a pattern of the at least one artificial echo associated with an active radar beacon.

In examples where the at least one circuitry/processor/memory 206 includes the optional radar signal processing 210, the optional radar signal processing 210 may be configured to process the return signals (including the reflected signals reflected from the surfaces 216 and the at least one artificial echo transmitted from the at least one active radar beacon 104) to determine conventional radar outputs 218 regarding ranging data for the surfaces 216 and the at least one active radar beacon 104. In examples, the at least one circuitry/processor/memory 206 includes the optional radar configuration and control 208 that is used to configure and control the at least one transmitter 202 and the at least one receiver 204. In examples, the at least one circuitry/processor/memory 206 includes clocks that are used to determine elapsed time between radar signal transmission and corresponding return signal receipt.

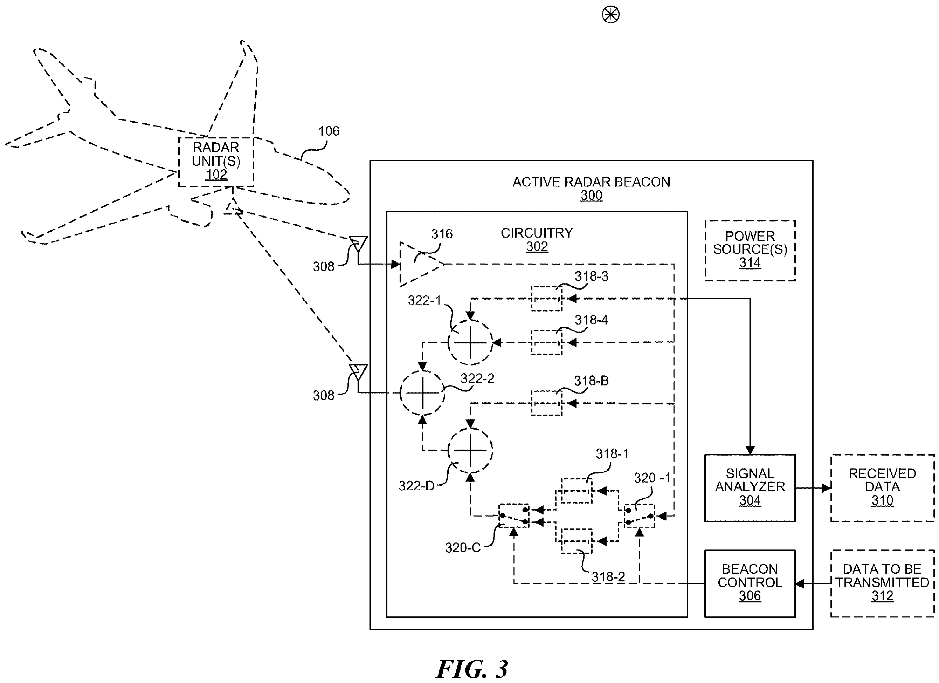

Figure 3 is a block diagram illustrating example active radar beacon 300. In examples, the example active radar beacon 300 can implement any of the at least one active radar beacon 104. In examples, the active radar beacon 300 can be implemented at a fixed location on the ground with a known location, though it is contemplated that the active radar beacon 300 could also be implemented onboard or coupled to a vehicle, held by a person, etc. if the location could be known (such as by GNSS or otherwise).

In examples, active radar beacon 300 includes circuitry 302, at least one signal analyzer 304, and at least one beacon control 306. In examples, the at least one circuitry 302 includes or is coupled to at least one antenna 308. While separate antennas 308 are shown for the reception and transmission through the circuitry 302 shown in Figure 3, other embodiments include a single antenna 308 used for both reception and transmission through the circuitry 302 or any number of antennas 308 used for reception and/or transmission through the circuitry 302. In examples, the at least one circuitry 302 is configured to receive radar signals from the at least one radar unit 102 and through the at least one antenna 308. In examples, the at least one circuitry 302 is configured to receive, modify, and re-transmit the radar signals back toward the at least one radar unit 102 through the at least one antenna 308 as at least one artificial echo.

In examples, the circuitry 302 is configured to provide the received radar signals to the at least one signal analyzer 304. In examples, the signal analyzer 304 decodes encoded data from the radar signals to generate decoded received data 310 by detecting changes in at least one parameter of the radar waveform of the radar signals received by the circuitry 302. In examples, the at least one parameter includes at least one of a frequency, phase, or amplitude at which the radar signals are received from the at least one radar unit 102.

In examples, the circuitry 302 is configured to encode data to be transmitted 312 into the at least one artificial echo by adding an adjusted delay into the at least one artificial echo. In examples, the parts of the circuitry 302 are controlled by the beacon control 306 to encode the data to be transmitted 312 into the at least one artificial echo by selecting between at least two different delays to encode a binary message into the at least one artificial echo. In examples, the active radar beacon 300 includes at least one power source 314 that provides power to the other elements of the active radar beacon 300.

In examples, the circuitry 302 implements parts of the active radar beacon 300 using various circuitry, such as at least one optional amplifier 316, at least one optional delay line 318 (such as optional delay line 318-1, optional delay line 318-2, and any combination of optional delay lines 318 through optional delay line 318-B), at least one optional switch 320 (such as optional switch 320-1 and any combination of optional switch 320 through optional switch 320-C), and at least one optional signal combiner 322 (such as optional signal combiner 322-1 and any combination of optional signal combiner 322 through optional signal combiner 322-D). In examples, the at least one optional amplifier 316 receives the radar signals from the at least one radar unit 102 using at least one antenna 308 and amplifies the received radar signals. In examples, the received radar signals are provided from the amplifier 316 of the circuitry 302 to the signal analyzer 304 to decode the encoded data from the received radar signal as described herein. In examples, the received radar signal is analyzed by at least one of monitoring a chirp start/stop frequency, a chirp delay, a phase demodulator, etc.

In examples, the received radar signals are also provided from the amplifier 316 of the circuitry 302 to various delay lines 318, which introduce various delays into the radar signals to generate the at least one artificial echo. In examples, the at least one artificial echo is summed with other at least one artificial echo using the at least one optional signal combiner 322. In examples, the beacon control 306 receives the data to be transmitted 312 and uses the at least one optional switch 320 (such as switch 320-1 and switch 320-C) to select and switch between different delay lines 318 (such as delay line 318-1 having a first delay and delay line 318-2 having a second delay) to encode the data to be transmitted 312 into the artificial echo. The generated artificial echo can be analyzed by another device (such as a radar unit 200 described herein) to identify the pattern of the first delay and the second delay in the artificial echo to decode the encoded data to be transmitted 312 form the artificial echo.

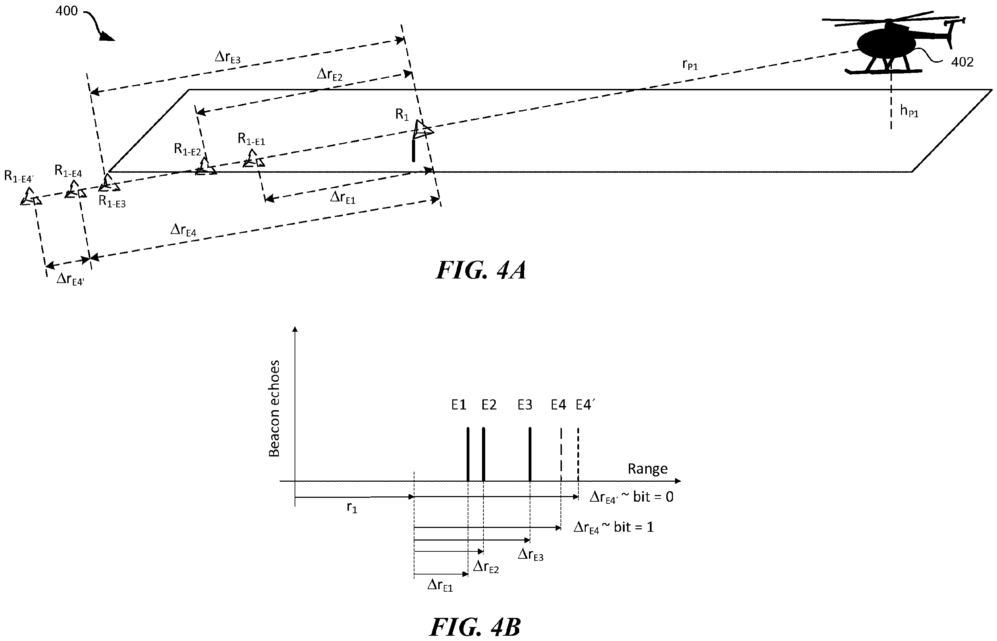

Figure 4A is an illustrative figure illustrating an example system 400 having a vehicle mounted radar unit and active radar beacons. In examples, the system 400 can be implemented with a Frequency Modulated Continuous Wave (FMCW) radar waveform, Pulse continuous Wave (Pulse CW), or other modulation techniques. In examples, the system 400 includes a vehicle 402 having a radar unit (such as a radar altimeter). In examples, active radar beacon R₁ is a reflector. In examples, the active radar beacon R₁ is on the ground transmitting four artificial echoes R_{1-E1}, R_{1-E2}, R_{1-E3} and R_{1-E4} at ranges, which generally differs from the slant range r_{P1} to active radar beacon R₁. In examples, h_{P1} represents a height of the vehicle 402 above ground. In examples, active radar beacon R₁ creates a pattern of four echoes. In examples, R_{1-E1} represents artificial echo #1 from active radar beacon R₁. In examples, R_{1-E2} represents artificial echo #2 from active radar beacon R₁. In examples, R_{1-E3} represents artificial echo #3 from active radar beacon R₁. In examples, R_{1-E4}, and R₁. _{E4'} represent artificial echo #4 from active radar beacon R₁ located either at a first position or a second position.

Figure 4B is a block diagram showing active radar beacon echoes implementing uplink communication in the system 400. In examples, the active radar beacon R₁ creates four echoes E1-E4. In examples, echoes E1-E3 are at fixed positions and are used for navigation purposes. In examples, echo E4 is configured such that its position (relative position Δr_{E4}) can be alternated between Δr_{E4} and Δr_{E4'}. In examples, the echo position or the change of echo position encodes a single bit of information (such as a landing clearance). In examples, other techniques are be used to encode data, such using phase modulation to encode data into individual echoes.

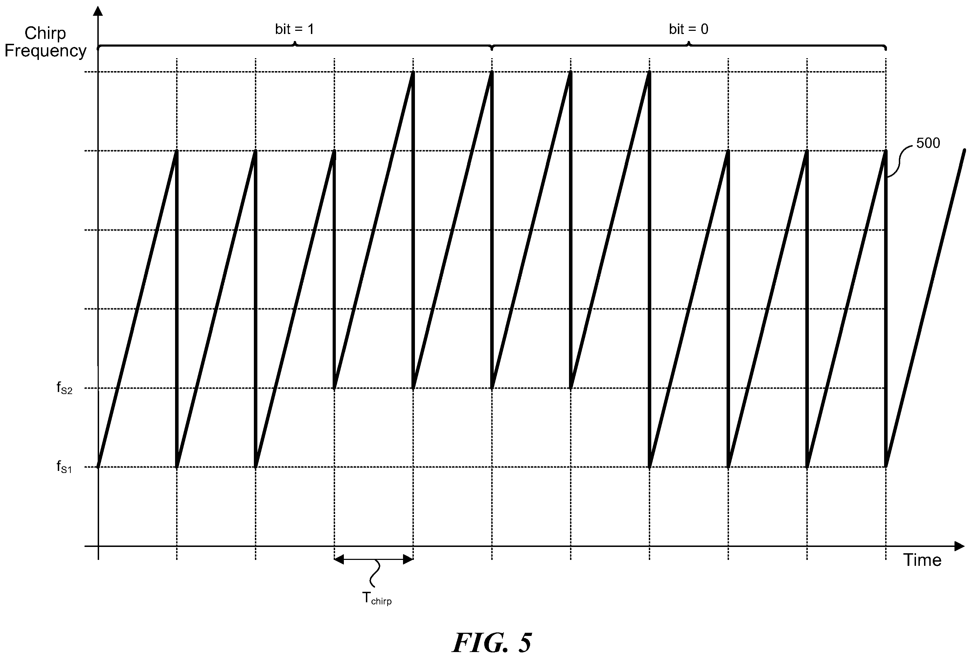

Figure 5 is a diagram illustrating a radar waveform 500. In examples, the radar waveform 500 is a Frequency Modulated Continuous Wave (FMCW) radar waveform including encoded information. In examples, the X-axis is time and the Y-axis is chirp frequency. In examples, the time and/or chirp frequency is not shown to scale. In examples, the information is encoded into bits of the waveform by using different start frequencies (fₛ₁ and fₛ₂) for consecutive chirps. In examples, other techniques might be used to encode data, including phase modulation (single or multiple data symbols encoded within a frequency ramp), amplitude modulation (AM), alternation of various waveform parameter, etc.

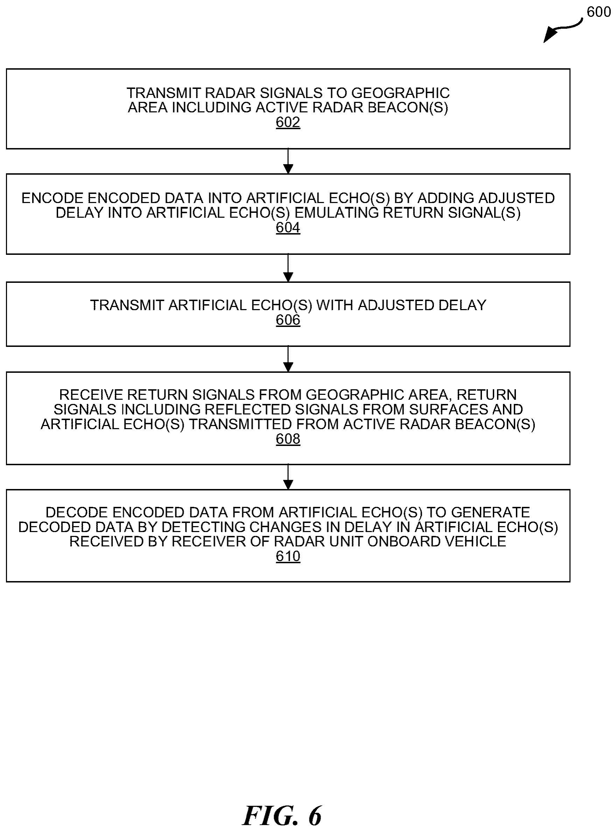

Figure 6 is an example method 600 for transmitting signals from an active radar beacon to a radar unit onboard a vehicle. In examples, method 600 begins at block 602 with transmitting radar signals to a geographic area including at least one active radar beacon. In examples, the transmitting of block 602 is by a transmitter of a radar unit onboard a vehicle and via at least a first antenna. In examples, method 600 proceeds to block 604 with encoding encoded data into at least one artificial echo by adding an adjusted delay into the at least one artificial echo. In examples, the at least one artificial echo emulates a return signal. In examples, the encoding of block 604 is by the at least one active radar beacon. In examples, the encoded data includes a landing clearance or other data to be transmitted. In examples, the encoded data is encoded into a binary message. In examples, the encoded data includes at least one of a preamble, an active radar beacon identification, error detection/correction related data, etc.

In examples, method 600 proceeds to block 606 with transmitting the at least one artificial echo with the adjusted delay. In examples, the transmitting of block 606 is by the at least one active radar beacon and via at least a second antenna. In examples, method 600 proceeds to block 608 with receiving return signals from the geographic area. In examples, the return signals include reflected signals reflected from surfaces and the at least one artificial echo transmitted from the at least one active radar beacon. In examples, the receiving of block 608 is by a receiver of the radar unit onboard the vehicle and via the at least the first antenna. In examples, method 600 proceeds to block 610 with decoding the encoded data from the at least one artificial echo to generate decoded data by detecting changes in a delay in the at least one artificial echo received by the receiver of the radar unit onboard the vehicle. In examples, the decoding of block 610 is by circuitry onboard the vehicle. In examples, decoding the encoded data from the at least one artificial echo includes identifying patterns in the detected at least one artificial echo and associate them with patterns of active radar beacons stored in an onboard database. In examples, decoding the encoded data includes extracting and decoding a binary message from the at least one artificial echo.

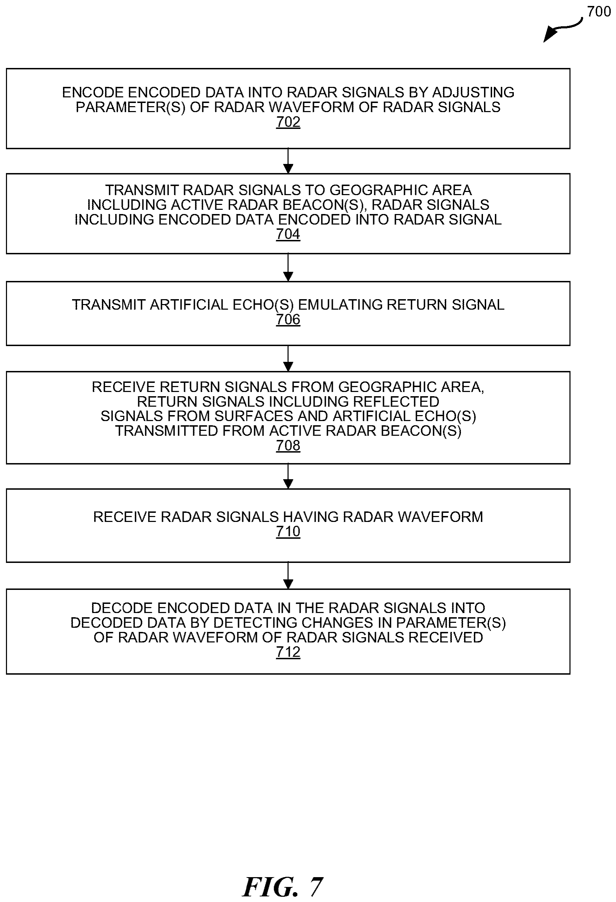

Figure 7 is an example method 700 for transmitting signals from a radar unit onboard a vehicle to an active radar beacon. In examples, method 700 begins at block 702 with encoding encoded data into radar signals by adjusting at least one parameter of a radar waveform of the radar signals. In examples, the parameter(s) of the radar waveform of the radar signals includes the frequency, phase, and/or amplitude at which the radar signals are transmitted by the transmitter and/or the start of the consecutive chirps. In examples, the encoding of block 702 is by circuitry onboard a vehicle. In examples, the encoded data includes an aircraft identification or other data to be transmitted. In examples, the encoded data is encoded into a binary message. In examples, the encoded data includes at least one of a preamble, an aircraft identification, error detection/correction related data, etc.

In examples, method 700 proceeds to block 704 with transmitting the radar signals to a geographic area including at least one active radar beacon. In examples, the radar signals include the encoded data encoded into the radar signals. In examples, the transmitting of block 704 is by a transmitter of a radar unit onboard the vehicle and via at least a first antenna. In examples, method 700 proceeds to block 706 with transmitting at least one artificial echo emulating a return signal. In examples, the transmitting of block 706 is by the at least one active radar beacon positioned within the geographic area and via at least a second antenna. In examples, the transmitting at least one artificial echo emulating a return signals occurs by modifying active radar beacon parameters (such as the position of the artificial echoes of the active radar beacon by introducing various delays into the artificial echoes of the active radar beacon).

In examples, method 700 proceeds to block 708 with receiving the return signals from the geographic area. In examples, the return signals include reflected signals from surfaces and the at least one artificial echo transmitted from the at least one active radar beacon. In examples, the receiving of block 708 is by a receiver of the radar unit onboard the vehicle and via the at least the first antenna. In examples, method 700 proceeds to block 710 with receiving radar signals having the radar waveform. In examples, the receiving of block 710 is by the at least one active radar beacon. In examples, method 700 proceeds to block 712 with decoding the encoded data in the radar signals into decoded data by detecting changes in the at least one parameter of the radar waveform of the radar signals received. In examples, the decoding of block 712 is by the at least one active radar beacon. In examples, the decoding of the encoded data in the radar signals includes measuring and/or estimate waveform parameters, performing synchronization and extracting the binary message, and decoding the binary message to get the transferred data.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory and storage media, including by way of example random access memory, memory storage devices, optical memory devices, magnetic media, floppy disks, magnetic tapes, hard drives, erasable programmable read-only memories (EPROMs), electrically erasable programmable read-only memories (EEPROMs), optical media (such as compact discs, DVDs, Blu-ray Discs), magneto-optical disks, and/or the like. Any of the foregoing may be supplemented by, or incorporated in, any known processor, such as a general purpose processor (GPP) or special purpose (such as a field-programmable gate array (FPGA), application-specific integrated circuit (ASIC) or other integrated circuit or circuitry), or any programmable logic device.

While detailed descriptions of one or more embodiments of the disclosure have been given above, various alternatives, modifications, and equivalents will be apparent to those skilled in the art without varying from the spirit of the disclosure. For example, while the embodiments described above refer to particular features, the scope of this disclosure also includes embodiments having different combinations of features and embodiments that do not include all of the described features. Accordingly, the scope of the present disclosure is intended to embrace all such alternatives, modifications, and variations as fall within the scope of the claims, together with all equivalents thereof. Therefore, the above description should not be taken as limiting.

### Examples

Example 1 includes a system comprising: at least one active radar beacon positioned within a geographic area, the at least one active radar beacon comprising: at least a first antenna; and first circuitry configured to encode data into at least one artificial echo by adding an adjusted delay into the at least one artificial echo, wherein the at least one artificial echo with the adjusted delay is transmitted via the at least the first antenna, wherein the at least one artificial echo emulates a return signal; and a radar unit onboard a vehicle, the radar unit comprising: at least a second antenna; a transmitter communicatively coupled to the at least the second antenna, the transmitter configured to transmit radar signals through the at least the second antenna to the geographic area including the at least one active radar beacon; a receiver communicatively coupled to the at least the second antenna, the receiver configured to receive return signals from the geographic area, the return signals including reflected signals reflected from surfaces and the at least one artificial echo transmitted from the at least one active radar beacon; and second circuitry configured to receive and decode the data encoded into the at least one artificial echo to generate decoded data by detecting changes in a delay in the at least one artificial echo received by the receiver.

Example 2 includes the system of Example 1, wherein the first circuitry of the at least one active radar beacon is configured to encode the data into the at least one artificial echo by adding the adjusted delay into the at least one artificial echo to change a position of the at least one artificial echo to encode a single bit of information.

Example 3 includes the system of any of Examples 1-2, wherein the first circuitry of the at least one active radar beacon is further configured to receive, via the at least the first antenna, at least one radar signal of the radar signals transmitted by the transmitter of the radar unit onboard the vehicle.

Example 4 includes the system of Example 3, wherein the first circuitry of the at least one active radar beacon is further configured to generate the at least one artificial echo by repeating and modifying the at least one radar signal of the radar signals transmitted by the transmitter of the radar unit onboard the vehicle.

Example 5 includes the system of any of Examples 1-4, wherein the radar unit comprises a radar altimeter configured to: determine an altitude of the vehicle based on at least one of the reflected signals reflected from the surfaces.

Example 6 includes a method comprising: transmitting, by a transmitter of a radar unit onboard a vehicle and via at least a first antenna, radar signals to a geographic area including at least one active radar beacon; encoding, by the at least one active radar beacon, encoded data into at least one artificial echo by adding an adjusted delay into the at least one artificial echo, wherein the at least one artificial echo emulates a return signal; transmitting, by the at least one active radar beacon and via at least a second antenna, the at least one artificial echo with the adjusted delay; receiving, by a receiver of the radar unit onboard the vehicle and via the at least the first antenna, return signals from the geographic area, the return signals including reflected signals reflected from surfaces and the at least one artificial echo transmitted from the at least one active radar beacon; and decoding, by circuitry onboard the vehicle, the encoded data from the at least one artificial echo to generate decoded data by detecting changes in a delay in the at least one artificial echo received by the receiver of the radar unit onboard the vehicle.

Example 7 includes the method of Example 6, further comprising: encoding, by the at least one active radar beacon, the encoded data into the at least one artificial echo to change a position of the at least one artificial echo to encode a single bit of information.

Example 8 includes the method of any of Examples 6-7, further comprising: receiving, at the at least one active radar beacon and via the at least the second antenna, at least one radar signal of the radar signals transmitted by the transmitter of the radar unit onboard the vehicle.

Example 9 includes the method of Example 8, further comprising: generating, at the at least one active radar beacon, the at least one artificial echo by repeating and modifying the at least one radar signal of the radar signals transmitted by the transmitter of the radar unit onboard the vehicle.

Example 10 includes the method of any of Examples 6-9, further comprising: determining, by the circuitry onboard the vehicle, an altitude of the vehicle based on at least one of the reflected signals reflected from the surfaces.

Example 11 includes a system comprising: at least one active radar beacon positioned within a geographic area, the at least one active radar beacon comprising: at least a first antenna; and circuitry configured to transmit at least one artificial echo via the at least the first antenna, wherein the at least one artificial echo emulates a return signal; a radar unit onboard a vehicle, the radar unit comprising: at least a second antenna; a transmitter communicatively coupled to the at least the second antenna, the transmitter configured to transmit radar signals through the at least the second antenna to the geographic area including the at least one active radar beacon, wherein the radar signals include encoded data, wherein the encoded data is encoded into the radar signals by adjusting at least one parameter of a radar waveform of the radar signals transmitted by the transmitter; and a receiver communicatively coupled to the at least the second antenna, the receiver configured to receive return signals from the geographic area, the return signals including reflected signals reflected from surfaces and the at least one artificial echo transmitted from the at least one active radar beacon; and wherein the circuitry of the at least one active radar beacon is further configured to: receive the radar signals having the radar waveform; and decode the encoded data in the radar signals into decoded data by detecting changes in the at least one parameter of the radar waveform of the radar signals received by the receiver.

Example 12 includes the system of Example 11, wherein the encoded data is encoded into the radar signals by adjusting at least one of a frequency, phase, or amplitude at which the radar signals are transmitted by the transmitter.

Example 13 includes the system of any of Examples 11-12, wherein the circuitry of the at least one active radar beacon is further configured to receive, via the at least the first antenna, at least one radar signal of the radar signals transmitted by the transmitter of the radar unit onboard the vehicle.

Example 14 includes the system of Example 13, wherein the first circuitry of the at least one active radar beacon is further configured to generate the at least one artificial echo by repeating and modifying the at least one radar signal of the radar signals transmitted by the transmitter of the radar unit onboard the vehicle.

Example 15 includes the system of any of Examples 11-14, wherein the radar unit comprises a radar altimeter configured to: determine an altitude of the vehicle based on at least one of the reflected signals reflected from the surfaces.

Example 16 includes a method comprising: encoding, by circuitry onboard a vehicle, encoded data into radar signals by adjusting at least one parameter of a radar waveform of the radar signals; transmitting, by a transmitter of a radar unit onboard the vehicle and via at least a first antenna, the radar signals to a geographic area including at least one active radar beacon, wherein the radar signals include the encoded data encoded into the radar signals; transmitting, by the at least one active radar beacon positioned within the geographic area and via at least a second antenna, at least one artificial echo emulating a return signal; receiving, by a receiver of the radar unit onboard the vehicle and via the at least the first antenna, return signals from the geographic area, the return signals including reflected signals from surfaces and the at least one artificial echo transmitted from the at least one active radar beacon; receiving, by the at least one active radar beacon, the radar signals having the radar waveform; and decoding, by the at least one active radar beacon, the encoded data in the radar signals into decoded data by detecting changes in the at least one parameter of the radar waveform of the radar signals received by the at least one active radar beacon.

Example 17 includes the method of Example 16, wherein the encoding, by the circuitry onboard the vehicle, the encoded data into the radar signals includes adjusting at least one of a frequency, phase, or amplitude at which the radar signals are transmitted by the transmitter.

Example 18 includes the method of any of Examples 16-17, further comprising: receiving, at the at least one active radar beacon and via the at least the second antenna, at least one radar signal of the radar signals transmitted by the transmitter of the radar unit onboard the vehicle.

Example 19 includes the method of Example 18, further comprising: generating, at the at least one active radar beacon, the at least one artificial echo by repeating and modifying the at least one radar signal of the radar signals transmitted by the transmitter of the radar unit onboard the vehicle.

Example 20 includes the method of any of Examples 16-19, further comprising: determining, by the circuitry onboard the vehicle, an altitude of the vehicle based on at least one of the reflected signals reflected from the surfaces.

## Claims

1. A system, comprising:
at least one active radar beacon positioned within a geographic area, the at least one active radar beacon comprising:
at least a first antenna; and
first circuitry configured to encode data into at least one artificial echo by adding an adjusted delay into the at least one artificial echo, wherein the at least one artificial echo with the adjusted delay is transmitted via the at least the first antenna, wherein the at least one artificial echo emulates a return signal; and
a radar unit onboard a vehicle, the radar unit comprising:
at least a second antenna;
a transmitter communicatively coupled to the at least the second antenna, the transmitter configured to transmit radar signals through the at least the second antenna to the geographic area including the at least one active radar beacon;
a receiver communicatively coupled to the at least the second antenna, the receiver configured to receive return signals from the geographic area, the return signals including reflected signals reflected from surfaces and the at least one artificial echo transmitted from the at least one active radar beacon; and
second circuitry configured to receive and decode the data encoded into the at least one artificial echo to generate decoded data by detecting changes in a delay in the at least one artificial echo received by the receiver.

2. The system of claim 1, wherein the first circuitry of the at least one active radar beacon is configured to encode the data into the at least one artificial echo by adding the adjusted delay into the at least one artificial echo to change a position of the at least one artificial echo to encode a single bit of information.

3. The system of claim 1, wherein the first circuitry of the at least one active radar beacon is further configured to receive, via the at least the first antenna, at least one radar signal of the radar signals transmitted by the transmitter of the radar unit onboard the vehicle.

4. The system of claim 3, wherein the first circuitry of the at least one active radar beacon is further configured to generate the at least one artificial echo by repeating and modifying the at least one radar signal of the radar signals transmitted by the transmitter of the radar unit onboard the vehicle.

5. A method comprising:
transmitting, by a transmitter of a radar unit onboard a vehicle and via at least a first antenna, radar signals to a geographic area including at least one active radar beacon;
encoding, by the at least one active radar beacon, encoded data into at least one artificial echo by adding an adjusted delay into the at least one artificial echo, wherein the at least one artificial echo emulates a return signal;
transmitting, by the at least one active radar beacon and via at least a second antenna, the at least one artificial echo with the adjusted delay;
receiving, by a receiver of the radar unit onboard the vehicle and via the at least the first antenna, return signals from the geographic area, the return signals including reflected signals reflected from surfaces and the at least one artificial echo transmitted from the at least one active radar beacon; and
decoding, by circuitry onboard the vehicle, the encoded data from the at least one artificial echo to generate decoded data by detecting changes in a delay in the at least one artificial echo received by the receiver of the radar unit onboard the vehicle.

6. A system, comprising:
at least one active radar beacon positioned within a geographic area, the at least one active radar beacon comprising:
at least a first antenna; and
circuitry configured to transmit at least one artificial echo via the at least the first antenna, wherein the at least one artificial echo emulates a return signal;
a radar unit onboard a vehicle, the radar unit comprising:
at least a second antenna;
a transmitter communicatively coupled to the at least the second antenna, the transmitter configured to transmit radar signals through the at least the second antenna to the geographic area including the at least one active radar beacon, wherein the radar signals include encoded data, wherein the encoded data is encoded into the radar signals by adjusting at least one parameter of a radar waveform of the radar signals transmitted by the transmitter; and
a receiver communicatively coupled to the at least the second antenna, the receiver configured to receive return signals from the geographic area, the return signals including reflected signals reflected from surfaces and the at least one artificial echo transmitted from the at least one active radar beacon; and
wherein the circuitry of the at least one active radar beacon is further configured to:
receive the radar signals having the radar waveform; and
decode the encoded data in the radar signals into decoded data by detecting changes in the at least one parameter of the radar waveform of the radar signals received by the receiver.

7. The system of claim 6, wherein the encoded data is encoded into the radar signals by adjusting at least one of a frequency, phase, or amplitude at which the radar signals are transmitted by the transmitter.

8. The system of claim 6, wherein the circuitry of the at least one active radar beacon is further configured to receive, via the at least the first antenna, at least one radar signal of the radar signals transmitted by the transmitter of the radar unit onboard the vehicle.

9. The system of claim 8, wherein the first circuitry of the at least one active radar beacon is further configured to generate the at least one artificial echo by repeating and modifying the at least one radar signal of the radar signals transmitted by the transmitter of the radar unit onboard the vehicle.

10. A method comprising:
encoding, by circuitry onboard a vehicle, encoded data into radar signals by adjusting at least one parameter of a radar waveform of the radar signals;
transmitting, by a transmitter of a radar unit onboard the vehicle and via at least a first antenna, the radar signals to a geographic area including at least one active radar beacon, wherein the radar signals include the encoded data encoded into the radar signals;
transmitting, by the at least one active radar beacon positioned within the geographic area and via at least a second antenna, at least one artificial echo emulating a return signal;
receiving, by a receiver of the radar unit onboard the vehicle and via the at least the first antenna, return signals from the geographic area, the return signals including reflected signals from surfaces and the at least one artificial echo transmitted from the at least one active radar beacon;
receiving, by the at least one active radar beacon, the radar signals having the radar waveform; and
**DECODING, BY THE AT LEAST ONE ACTIVE RADAR BEACON, THE ENCODED DATA IN THE RADAR SIGNALS INTO DECODED DATA BY DETECTING CHANGES IN THE AT LEAST ONE PARAMETER OF THE RADAR WAVEFORM OF THE RADAR SIGNALS RECEIVED BY THE AT LEAST ONE ACTIVE RADAR BEACON.**
